# EUROPÄISCHE PATENTSCHRIFT

(11) **EP 2 558 402 B1**
(45) Veröffentlichungstag und Bekanntmachung des Hinweises auf die Patenterteilung: **16.09.2015**
(21) Anmeldenummer: 11711924.8
(22) Anmeldetag: 05.04.2011
(51) Int. Cl.: B66F 9/075, B62D 7/02, B62D 7/15, B62D 5/04, B62D 5/09, B62D 7/14

(54) **LENKVERFAHREN UND LENKSYSTEM FÜR EIN FLURFÖRDERZEUG**
STEERING METHOD AND STEERING SYSTEM FOR AN INDUSTRIAL TRUCK
PROCÉDÉ DE GUIDAGE ET SYSTÈME DE GUIDAGE D'UN ENGIN DE MANUTENTION AU SOL

(30) Priorität: 16.04.2010 DE 102010016470
(43) Veröffentlichungstag der Anmeldung: 20.02.2013
(73) Patentinhaber: Hubtex Maschinenbau GmbH & Co. Kg, 36041 Fulda (DE)
(72) Erfinder: KELLER, Jürgen, 36137 Großenlüder (DE)
(74) Vertreter: Kluin, Jörg-Eden
(86) Internationale Anmeldenummer: PCT/EP2011/055228
(87) Internationale Veröffentlichungsnummer: WO 2011/128222

(56) Entgegenhaltungen:
- EP-A1- 0 625 478
- EP-A1- 1 118 581
- EP-A2- 0 712 805
- DE-A1- 19 941 883
- JP-A- 5 116 643

## Beschreibung

Die Erfindung betrifft ein Lenkverfahren eines Flurförderzeugs, bei dem mittels eines Lenkgebers, insbesondere eines Lenkrades, zumindest ein lenkbares Rad durch eine hydraulische oder mechanische Verbindung mit dem Lenkgeber manuell gelenkt wird. Die Erfindung betrifft darüber hinaus ein Lenksystem für ein Flurförderzeug, mit einem Lenkgeber, insbesondere einem Lenkrad, mit einem hydraulischen Lenkventil, mit welchem der Lenkgeber mechanisch verbunden ist, und mit mindestens einem ersten hydraulischen Lenkmotor zum Lenken zumindest eines manuell lenkbaren ersten Rades, der hydraulisch mit dem Lenkgeber verbunden ist, sowie ein mit einem derartigen Lenksystem ausgerüstetes Flurförderzeug.

Derartige, rein manuell arbeitende Lenkverfahren und Lenksysteme sind bei Flurförderzeugen bereits seit langem bekannt. Sie weisen den Nachteil auf, dass sich unterschiedliche Lenkprogramme, beispielsweise zum Betrieb des Flurförderzeugs in Längs-, Quer- oder Diagonalfahrt, nicht oder nur durch einen erheblichen, mechanischen Aufwand umsetzten lassen.

Um diesen Nachteil zu beheben sind so genannte "steer-by-wire" - Lenksysteme bekannt geworden, die Lenkbewegungen der lenkbaren Räder mit Hilfe von Lenkmotoren bewerkstelligen. Die Lenkmotoren werden über einen Lenkcomputer in Abhängigkeit der Betätigung des Lenkgebers und des jeweils gewählten Lenkprogramms angesteuert.

Nachteilig ist bei einem derartigen, beispielsweise aus der DE 199 41 883 A1 bekannten Lenksystem, dass eine Lenkbetätigung des Lenkgebers, beispielsweise des Lenkrades, ohne jede Rückmeldung über den Fahrzustand des Flurförderzeugs erfolgt. Durch die unabhängig vom Fahrzustand des Flurförderzeugs gleichmäßig leichtgängige Lenkung kann es insbesondere bei höheren Geschwindigkeiten zu kritischen Fahrsituationen durch der Geschwindigkeit nicht angemessene Lenkbewegungen kommen.

Aus der EP 0 712 805 A2 ist ein Gabelstapler bekannt, bei welchem ein Antriebsrad mechanisch mit Hilfe eines Lenkrades gelenkt wird. Der Lenkwinkel wird mit Hilfe eines Potentiometers erfasst und einem Lenkcomputer zugeführt, der in Abhängigkeit des jeweils gewählten Lenkprogramms motorisch gelenkte Lasträder lenkbetätigt.

Zur Erhöhung der Fahrsicherheit ist es bekannt, bei "steer-by-wire" - Lenkungen den Lenkgeber mechanisch mit einem Lenkkraftsimulator zu verbinden, welcher in Abhängigkeit des jeweiligen Fahrzustandes Lenk- und Rückstellkräfte im Lenkgeber erzeugen soll. Nachteilig ist jedoch bei derartig ausgestalteten "steer-by-wire" - Lenkungen der mit dem Lenkkraftsimulator verbundene Aufwand, eine erhöhte technische Anfälligkeit sowie das Problem, dass eine naturgetreue Simulierung der Lenk- und Rückstellkräfte nur eingeschränkt möglich ist.

Der Erfindung liegt daher die Aufgabe zugrunde, ein Lenkverfahren und ein Lenksystem für Flurförderzeuge, welches einen Betrieb des Flurförderzeugs in unterschiedlichen Lenkprogrammen bei gleichzeitigem Erhalt des Fahrgefühls im Lenkgeber erlaubt, bereitzustellen.

Diese Aufgabe wird durch das in Anspruch 1 wiedergegebene Lenkverfahren sowie das in Anspruch 3 wiedergegebene Lenksystem gelöst.

Bei dem erfindungsgemäßen Lenkverfahren eines Flurförderzeugs wird mittels eines Lenkgebers, insbesondere eines Lenkrades, zumindest ein lenkbares Rad durch eine hydraulische oder mechanische Verbindung mit dem Lenkgeber manuell gelenkt. Hierdurch wird dem Fahrer von dem Lenkgeber, insbesondere dem Lenkrad das Fahrgefühl wie bei einer herkömmlichen, rein manuellen Anlenkung der gelenkten Räder vermittelt. Erfindungsgemäß werden die Winkelpositionen des mindestens einen manuell gelenkten Rades erfasst und mindestens ein weiteres lenkbares Rad in Abhängigkeit der erfassten Winkelposition motorisch angelenkt. Diese motorische Anlenkung kann nun nicht nur- wie beispielsweise bei einem rein mechanisch wirkenden Lenkverfahren - analog zu den Lenkbewegungen des manuell gelenkten Rades erfolgen, sondern vollkommen unabhängig von diesen gemäß eines vorgewählten Lenkprogramms, wenn - wie bevorzugt - die Winkelposition des manuell gelenkten Rades einer Lenksteuerungseinrichtung zugeführt und von dieser in Abhängigkeit des jeweils vorgewählten Lenkprogramms das mindestens eine motorisch lenkbare Rad gelenkt wird.

Um Flurförderzeuge auch unter sehr beengten Bedingungen, beispielsweise in Hallen mit engstehenden Lagerregalen bewegen zu können, ist es von Vorteil und bekannt, bei Flurförderzeugen die Räder sämtlicher Achsen lenkbar und zwei unterschiedliche Lenkprogramme vorzusehen, bei denen die Räder in Geradeausstellung um 90° zu einer festen Richtungsachse des Fahrzeugs verschieden auslenkbar sind. Ein Fahrtrichtungswechsel des Flurförderzeugs um 90° erfordert aufgrund dieser Maßnahme keine Kurvenfahrt, sondern das Fahrzeug kann nach abstoppen beispielsweise aus einer Längsfahrt nach Wechsel des Lenkprogramms in einer Querfahrt weiterbewegt werden. Ändert sich bei einem Wechsel von beispielsweise Längs- in Querfahrt die gelenkte Achse, über deren Räder sich das Fahrgefühl bestmöglich vermitteln lässt, so wird erfindungsgemäß nach dem Wechsel der Fahrtrichtung das mindestens eine zuvor motorisch gelenkte Rad manuell und das mindestens eine zuvor manuell gelenkte Rad motorisch gelenkt.

Das erfindungsgemäße Lenkverfahren verbindet daher die Vorteile rein manueller mit denjenigen von "steer-by-wire" - Lenkverfahren.

In der bevorzugten Ausführungsform wird mindestens ein Rad bei einer Fahrtrichtung -bevorzugt der Querfahrt- manuell -bevorzugt hydraulisch- gelenkt und bei einer anderen Fahrtrichtung -bevorzugt der Längsfahrt- überhaupt nicht gelenkt.

Das erfindungsgemäße Lenksystem weist mindestens einen den Lenkwinkel des mindestens einen manuell gelenkten ersten Rades erfassenden Lenkwinkelaufnehmer auf. Dieser ist mit einer Lenksteuerungseinrichtung wirkverbunden. Ferner umfasst das erfindungsgemäße Lenksystem mindestens ein weiteres lenkbares, motorisch gelenktes zweites Rad, dessen Lenkmotor in Abhängigkeit eines von der Lenksteuerungseinrichtung erzeugten Lenkwinkelsollwertes antreibbar ist.

Ferner weist das Lenksystem ein Umschaltventil auf, mittels welchem das Lenkventil wahlweise mit dem ersten hydraulischen Lenkmotor oder dem zweiten hydraulischen Lenkmotor verbunden und der jeweils andere hydraulische Lenkmotor dann über die Lenksteuerungseinrichtung angetrieben wird. Die ersten und zweiten Lenkmotoren sind dann vorzugsweise baugleich ausgebildet. Maßnahmen, die eine Anpassung der hydraulischen Beaufschlagung in Abhängigkeit des jeweiligen hydraulischen Lenkmotors ermöglichen, können dann entfallen.

Die motorische Lenkung des zweiten Rades kann grundsätzlich in beliebiger Weise, beispielsweise auch elektromotorisch erfolgen. Besonders bevorzugt ist es jedoch, für die Betätigung des zweiten Rades ebenfalls einen hydraulischen Lenkmotor vorzusehen.

Die Lenksteuereinrichtung ist vorzugsweise als Lenkcomputer ausgebildet, der eine Einrichtung zum Speichern mehrerer Lenkprogramme umfasst.

Die Lenkwinkelaufnehmer sind dann vorzugsweise als elektrische oder elektronische Lenkwinkelsensoren ausgebildet.

Die Erfindung erstreckt sich auch auf ein Flurförderzeug mit einem zuvor beschriebenen Lenksystem.

Die Erfindung soll nun am Beispiel eines Ausführungsbeispiels erläutert werden. Es zeigen:
- Fig. 1: - schematisch - ein Blockdiagramm eines erfindungsgemäßen Lenksystems am Beispiel eines drei Räder aufweisenden Flurförderzeugs in Längsfahrt sowie
- Fig. 2: dasselbe Blockdiagramm des Lenksystems am Beispiel desselben Flurförderzeugs in Querfahrt.

In den Figuren ist schematisch das Fahrgestell 1 eines als Ganzes mit 100 bezeichneten Flurförderzeugs dargestellt. Sämtliche Räder 2, 3, 4 sind um senkrecht zur Zeichenebene verlaufende Achsen A lenkbar angeordnet.

Zum Schwenken der Räder 2, 3, 4 sind jeweils einem der Räder zugeordnete Lenkmotoren 5, 6, 7 vorgesehen, die jeweils mit einem flexiblen Zugelement 8, 9, 10, beispielsweise Kette oder Zahnriemen, mit einem Lenkbetätigungsrad 11, 12, 13 gekoppelt sind. Jedes Lenkbetätigungsrad ist mit einer in der Zeichnung nicht dargestellten, die jeweilige Achse A definierenden Lenkwelle drehfest verbunden.

An jedem der Lenkbetätigungsräder 11, 12, 13 ist ein beispielsweise elektrisch oder elektronisch arbeitender Lenkwinkelaufnehmer 14, 15, 16 vorgesehen. Der Lenkwinkelaufnehmer 14 ist über eine Signalleitung 17, der Lenkwinkelaufnehmer 15 über eine Signalleitung 18 und der Lenkwinkelaufnehmer 16 über eine Signalleitung 19 mit einer Lenksteuerungseinrichtung 20 verbunden, die als Lenkcomputer 21 mit einer Einrichtung zum Speichern mehrerer Lenkprogramme ausgebildet ist. Über weitere Signalleitungen 22, 23 ist der Lenkcomputer 21 mit Einrichtungen zur Lenkprogrammauswahl 24 sowie zur Fahrtrichtungsvorwahl 25 verbunden.

Ferner ist die Lenksteuerungseinrichtung 20 über eine Signalleitung 26 mit einem Lenkblock 27 verbunden. Bei diesem Lenkblock 27 handelt es sich um eine Mehrventilanordnung, die in Abhängigkeit der über die Signalleitung anliegenden Signale über eine Hydraulikzuleitung 28 von einer in der Zeichnung nicht dargestellten Hydraulikpumpe zugeführte Hydraulikflüssigkeit individuell den Lenkmotoren 5, 6, 7 über Hydraulikleitungen 29, 30, 31 zuführt.

Ferner ist der Lenkblock 27 über eine Hydraulikleitung 32 mit einem Prioritätsventil 33 verbunden. Über die Hydraulikleitung 32 wird dem Prioritätsventil 33 nicht zur Betätigung der Lenkmotoren 5, 6, 7 benötigte Hydraulikflüssigkeit zugeführt. Von diesen wird - sofern zur Lenkbetätigungsunterstützung benötigt - Hydraulikflüssigkeit über eine Hydraulikleitung 34 einem Lenkorbitrol 36 zugeleitet, andernfalls über eine Hydraulikleitung 35 einem in der Zeichnung nicht dargestellten Arbeitssteuerblock zur Beaufschlagung weiterer hydraulisch betätigter Komponenten des Flurförderzeugs.

Der Betätigung des Lenkorbitrols 36 dient ein mechanisch mit ihm verbundener Lenkgeber 37 in Form eines Lenkrades.

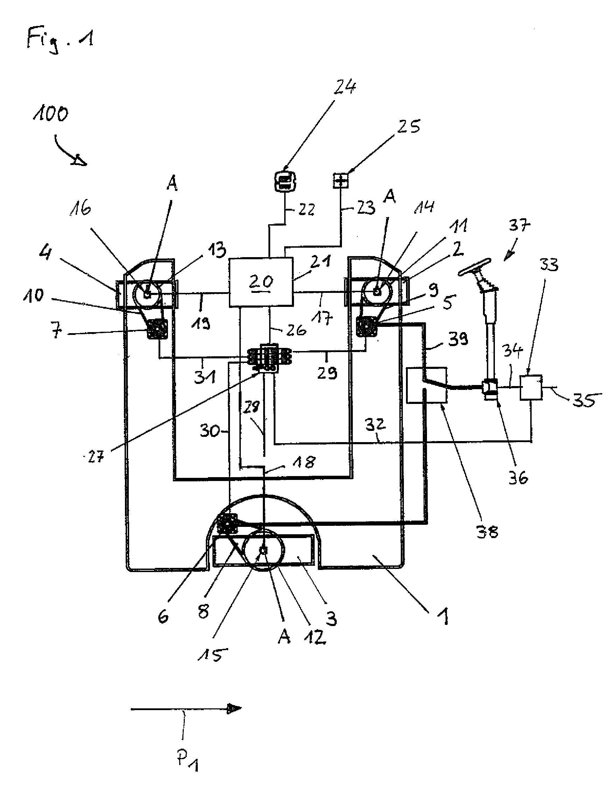

Bei dem in Fig. 1 dargestellten Lenksystemzustand, bei welchem sich das Fahrzeug in durch den Pfeil P1 symbolisierter Längsfahrtrichtung befindet, ist das Lenkorbitrol 36 mit Hilfe eines Umschaltventils 38 über eine Hydraulikleitung 39 direkt mit dem ersten Lenkmotor 5 des ersten Rades 2 verbunden. Von diesem während des Fahrbetriebs erzeugte Rückstellkräfte werden auf den Lenkgeber 37 übertragen und so als Fahrgefühl spürbar. Der jeweilige Lenkwinkel des ersten Rades 2 wird über den ersten Lenkwinkelaufnehmer 14 und die Signalleitung 17 der Lenksteuerungseinrichtung zugeführt. Diese beaufschlagt dann in Abhängigkeit der über die Signalleitung 26 anliegenden Signale die weiteren (zweiten) Lenkmotoren 6, 7 der weiteren (zweiten) Räder 3, 4 zum Bewirken des jeweils erforderlichen Lenkwinkels.

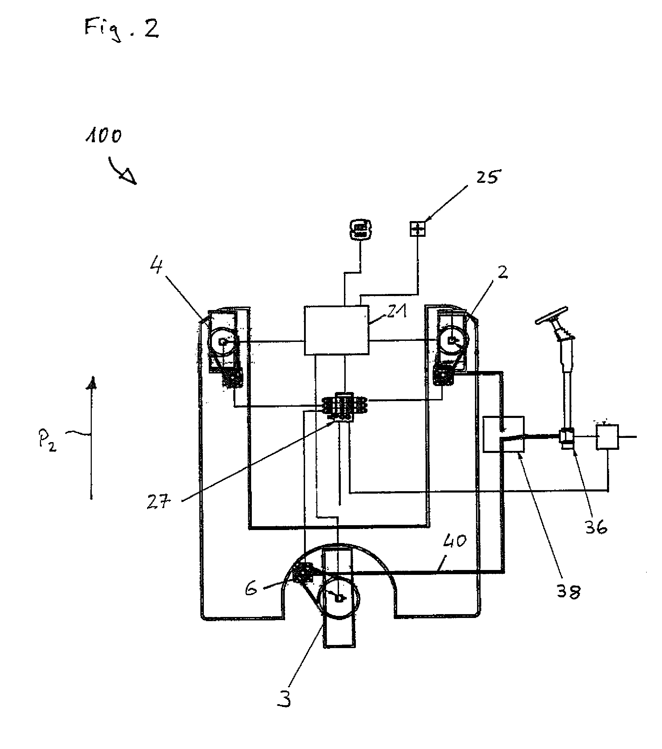

Bei dem gezeigten Ausführungsbeispiel des Flurförderzeugs 100 wird mittels eines Lenkgebers 37 in Form eines Lenkrades ein lenkbares Rad durch eine hydraulische Verbindung mit dem Lenkgeber manuell gelenkt. In der in Fig. 1 gezeigten Längsfahrt wird das Rad 2 durch eine hydraulische Verbindung mit dem Lenkgeber manuell gelenkt und in der in Fig. 2 gezeigten Querfahrt wird das Rad 3 durch eine hydraulische Verbindung mit dem Lenkgeber manuell gelenkt.

Wird nun über die Einrichtung 25 zur Fahrtrichtungsvorwahl von der in Fig. 1 dargestellten Längsfahrt auf die in Fig. 2 dargestellte und durch den Pfeil P2 symbolisierte Querfahrt umgeschaltet, so steuert der Lenkcomputer 21 den Lenkblock 27 derart an, dass zunächst über die Hydraulikleitungen 29, 30, 31 sämtliche Räder 2, 3, 4 um 90° verschwenkt werden. Gleichzeitig wird das Umschaltventil 38 auf die zum Lenkmotor 6 des Rades 3 führende Hydraulikleitung 40 umgeschaltet, so dass das Lenkorbitrol 36 nun direkt mit dem Lenkmotor 6 des Rades 3 verbunden und Lenkreaktionskräfte dieses Rades im Lenkgeber 37 spürbar werden. Im Gegensatz zum Rad 3, welches nun manuell gelenkt wird, verbleiben die Räder 2 und 4 starr oder werden - je nach Lenkprogramm - durch über den Lenkblock 27 zugeführte Hydraulikflüssigkeit motorisch gelenkt.

In einem Ausführungsbeispiel wird das Rad 3 in der in Fig. 1 gezeigten Längsfahrt nicht gelenkt. Das Rad 3 wird in diesem Ausführungsbeispiel also ausschließlich in Querfahrt und dann direkt hydraulisch betätigt.

### Bezugszeichenliste:

- 100: Flurförderzeug
- 1: Fahrgestell
- 2: Rad
- 3: Rad
- 4: Rad
- 5: Lenkmotor
- 6: Lenkmotor
- 7: Lenkmotor
- 8: flexibles Zugelement
- 9: flexibles Zugelement
- 10: flexibles Zugelement
- 11: Lenkbetätigungsrad
- 12: Lenkbetätigungsrad
- 13: Lenkbetätigungsrad
- 14: Lenkwinkelaufnehmer
- 15: Lenkwinkelaufnehmer
- 16: Lenkwinkelaufnehmer
- 17: Signalleitung
- 18: Signalleitung
- 19: Signalleitung
- 20: Lenkungssteuerungseinrichtung
- 21: Lenkcomputer
- 22: Signalleitung
- 23: Signalleitung
- 24: Einrichtung zur Lenkprogrammauswahl
- 25: Einrichtung zur Fahrtrichtungsvorwahl
- 26: Signalleitung
- 27: Lenkblock
- 28: Hydraulikleitung
- 29: Hydraulikleitung
- 30: Hydraulikleitung
- 31: Hydraulikleitung
- 32: Hydraulikleitung
- 33: Prioritätsventil
- 34: Hydraulikleitung
- 35: Hydraulikleitung
- 36: Lenkorbitrol
- 37: Lenkgeber
- 38: Umschaltventil
- 39: Hydraulikleitung
- 40: Hydraulikleitung
- A: Achsen
- P1: Pfeil
- P2: Pfeil

## Patentansprüche

1. Lenkverfahren eines Flurförderzeugs, bei dem
mittels eines Lenkgebers (37), insbesondere eines Lenkrades, zumindest ein lenkbares Rad (2) durch eine hydraulische oder mechanische Verbindung mit dem Lenkgeber (37) manuell gelenkt wird,
die Winkelposition des mindestens einen manuell gelenkten Rades (2) erfasst wird,
und mindestens ein weiteres lenkbares Rad (3) in Abhängigkeit der erfassten Winkelposition motorisch gelenkt wird,
**dadurch gekennzeichnet, dass** für einen 90° - Wechsel der Fahrtrichtung des Flurförderzeugs die Räder (2, 3, 4) um 90° gelenkt werden und das zuvor motorisch gelenkte Rad (3) manuell und das mindestens eine zuvor manuell gelenkte Rad motorisch gelenkt wird.

2. Lenkverfahren nach Anspruch 1, **dadurch gekennzeichnet, dass** die Winkelposition einer Lenksteuerungseinrichtung (20) zugeführt und von dieser in Abhängigkeit eines vorwählbaren Lenkprogramms das mindestens eine motorisch lenkbare Rad (2, 3) gelenkt wird.

3. Lenksystem für ein Flurförderzeug,
mit einem Lenkgeber (37), insbesondere einem Lenkrad,
mit einem Lenkorbitrol (36), mit welchem der Lenkgeber (37) mechanisch verbunden ist,
mit mindestens einem ersten hydraulischen Lenkmotor (5) zum Lenken zumindest eines manuell lenkbaren ersten Rades (2), der hydraulisch mit dem Lenkgeber (37) verbunden ist,
mit mindestens einem den Lenkwinkel des mindestens einen manuell gelenkten ersten Rades (2) erfassenden Lenkwinkelaufnehmer, der mit einer Lenksteuereinrichtung (20) wirkverbunden ist,
und mit mindestens einem weiteren lenkbaren, motorisch gelenkten zweiten Rad (3), das mit einem zweiten hydraulischen Lenkmotor (6) wirkverbunden ist, der in Abhängigkeit eines von der Lenksteuereinrichtung (20) erzeugten Lenkwinkelsollwertes antreibbar ist,
**dadurch gekennzeichnet, dass** ein Umschaltventil (38) vorgesehen ist, mittels welchem zwischen der hydraulischen Verbindung (39) des Lenkorbitrols (36) mit dem ersten hydraulischen Lenkmotor (5) und der hydraulischen Verbindung (40) des Lenkorbitrols (36) mit dem zweiten hydraulischen Lenkmotor (6) gewechselt werden kann.

4. Lenksystem nach Anspruch 3, **dadurch gekennzeichnet, dass** die ersten und zweiten Lenkmotoren (5, 6) baugleich ausgebildet sind.

5. Lenksystem nach Anspruch 3 oder 4, **dadurch gekennzeichnet, dass** die Lenksteuerungseinrichtung (20) ein Lenkcomputer (21) mit einer Einrichtung zum Speichern mehrerer Lenkprogramme ist.

6. Lenksystem nach Anspruch 5, **dadurch gekennzeichnet, dass** die Lenkwinkelaufnehmer (14, 15, 16) als elektrische oder elektronische Lenkwinkelsensoren ausgebildet sind.

7. Flurförderzeug mit einem Lenksystem nach einem der Ansprüche 3 bis 6.

## Claims

1. A steering method for an industrial truck in which
by means of a steering transducer (37), in particular a steering wheel, at least one steerable wheel (2) is manually steered by a hydraulic or mechanical connection with the steering transducer (37),
the angular position of the at least one manually steered wheel (2) is detected,
and at least one further steerable wheel (3) is motor-steered in dependence on the detected angular position,
**characterized in that,** for a 90° change of travel direction of the industrial truck, the wheels (2, 3, 4) are steered by 90° and the above motor-steered wheel (3) is manually steered and the at least one above manually-steered wheel is motor-steered.

2. The steering method according to claim 1, **characterized in that** the angular position is supplied to a steering control apparatus (20), and from this the at least one motor-steered wheel (2, 3) is steered in dependence on a pre-selectable steering program.

3. A steering system for an industrial truck,
with a steering transducer (37), in particular a steering wheel,
with a steering orbitrol (36) with which the steering transducer is mechanically connected, with at least one first hydraulic steering motor (5) for steering at least one manually-steerable first wheel (2), which is hydraulically connected with the steering transducer (37),
with at least one steering angle sensor which senses the steering angle of the at least one manually steered first wheel (2), which is operatively connected with a steering control apparatus (20),
and with at least one further steerable, motor-steered second wheel (3), which is operatively connected with a second hydraulic steering motor (6) which is drivable in dependence on a reference value generated by the steering control apparatus (20),
**characterized in that** a switch-over valve (38) is provided, by means of which can be switched between the hydraulic connection (39) of the steering orbitrol (36) with the first hydraulic steering motor (5) and the hydraulic connection (40) of the steering orbitrol (36) with the second hydraulic steering motor (6).

4. The steering system according to claim 3, **characterized in that** the first and second steering motors (5, 6) are structurally identical in design.

5. The steering system according to claims 3 or 4, **characterized in that** the steering control apparatus (20) is a steering computer (21) with an apparatus for storing a plurality of steering programs.

6. The steering system according to claim 5, **characterized in that** the steering angle sensors (14, 15, 16) are designed as electric or electronic steering angle sensors.

7. An industrial truck with a steering system according to any one of claims 3 to 6.

## Revendications

1. Procédé de direction d'un chariot de manutention, dans lequel
au moins une roue dirigeable (2) est dirigée manuellement au moyen d'un mécanisme de direction (37), en particulier un volant, par une liaison hydraulique ou mécanique avec le mécanisme de direction (37),
la position angulaire de l'au moins une roue dirigée manuellement (2) est détectée,
et au moins une autre roue dirigeable (3) est dirigée de façon motorisée en fonction de la position angulaire détectée,
**caractérisé en ce que** pour effectuer un changement de 90° de la direction de déplacement du chariot de manutention, les roues (2, 3, 4) sont déviées de 90° et la roue (3) qui était auparavant dirigée de façon motorisée est dirigée manuellement, et l'au moins une roue qui était auparavant dirigée manuellement est dirigée de façon motorisée.

2. Procédé de direction selon la revendication 1, **caractérisé en ce que** la position angulaire est transmise à un dispositif de commande de direction (20) et l'au moins une roue dirigeable de façon motorisée (2, 3) est dirigée par celui-ci, en fonction d'un programme de direction présélectionnable.

3. Système de direction d'un chariot de manutention comprenant
un mécanisme de direction (37), en particulier un volant,
un orbitrol de direction (36) auquel est relié mécaniquement le mécanisme de direction (37),
au moins un premier moteur de direction hydraulique (5) pour la direction d'au moins une première roue dirigeable manuellement (2), lequel est relié hydrauliquement au mécanisme de direction (37),
au moins un détecteur d'angle de direction détectant l'angle de direction de l'au moins une première roue dirigée manuellement (2), lequel est fonctionnellement relié à un dispositif de commande de direction (20),
et au moins une autre deuxième roue dirigeable (3) dirigée de façon motorisée, laquelle est fonctionnellement reliée à un deuxième moteur de direction hydraulique (6), lequel peut être entraîné en fonction d'une valeur de consigne d'angle de direction produite par le dispositif de commande de direction (20),
**caractérisé en ce qu'**il est prévu une soupape d'inversion (38) permettant de commuter entre la liaison hydraulique (39) de l'orbitrol de direction (36) avec le premier moteur de direction hydraulique (5) et la liaison hydraulique (40) de l'orbitrol de direction (36) avec le deuxième moteur de direction hydraulique (6).

4. Système de direction selon la revendication 3, **caractérisé en ce que** les premier et deuxième moteurs de direction (5, 6) sont construits de façon identique.

5. Système de direction selon la revendication 3 ou 4, **caractérisé en ce que** le dispositif de commande de direction (20) est un ordinateur de direction (21) comprenant une mémoire permettant de stocker plusieurs programmes de direction.

6. Système de direction selon la revendication 5, **caractérisé en ce que** les détecteurs d'angle de direction (14, 15, 16) sont conçus comme des capteurs d'angle de direction électriques ou électroniques.

7. Chariot de manutention comprenant un système de direction selon l'une des revendications 3 à 6.
